# EUROPÄISCHE PATENTSCHRIFT

(11) **EP 1 122 121 B1**
(45) Veröffentlichungstag und Bekanntmachung des Hinweises auf die Patenterteilung: **08.02.2006**
(21) Anmeldenummer: 00128033.8
(22) Anmeldetag: 21.12.2000
(51) Int. Cl.: B60N 2/36, B60R 5/00, B60N 2/44

(54) **Transportbehälter-Einrichtung für den Einbau in Kraftfahrzeuge, wie z.B. Durchladeeinrichtung**
Transport container device for installation in a motor vehicle for example a device with a loading opening
Dispositif à conteneur de transport pour le montage dans un véhicule automobile par exemple un dispositif à évidement de chargement

(30) Priorität: 31.01.2000 DE 10004021
(43) Veröffentlichungstag der Anmeldung: 08.08.2001
(73) Patentinhaber: BOS GmbH & Co. KG, 73760 Ostfildern (DE)
(72) Erfinder: Butz, Peter, 20149 Hamburg (DE); Sitzler, Wolfgang, 42111 Wuppertal (DE)
(74) Vertreter: Ostriga, Sonnet, Wirths & Roche

(56) Entgegenhaltungen:
- DE-A- 19 519 507
- DE-A- 19 727 500
- DE-U- 29 821 030

## Beschreibung

Die Erfindung betrifft eine Transportbehälter-Einrichtung für den Einbau in Kraftfahrzeuge, wie z.B. Durchladeeinrichtung, insbesondere für den sitzlehnen- oder kofferraumwandseitigen Einbau in Personenkraftwagen, entsprechend dem Oberbegriff des Anspruchs 1. Eine solche Transportbehälter-Einrichtung ist in der DE 197 27 500 A1 beschrieben.

Der Erfindung liegt die Aufgabe zugrunde, das Verriegelungssystem einer solchen Transportbehälter-Einrichtung baulich einfacher zu gestalten.

In Verbindung mit den Merkmalen des Oberbegriffs wird diese Aufgabe entsprechend der Erfindung dadurch gelöst, dass das in einer Führung des Befestigungsrahmens beweglich gelagerte Riegelelement an seiner einen Seite am freien Ende eines mit seinem Gegenende mindestens mittelbar am Befestigungsrahmen gehaltenen und an letzterem beweglich geführten Zugmittels, wie Seil od. dgl., angebunden ist, dass an der anderen Seite des Riegelelements eine Federrückstellkraft, das Zugmittel spannend, angreift, und dass das gespannte Zugmittel in seinem Bereich zwischen seinem Gegenende und seinem freien Ende durch Bewegung des Betätigungselements quer zu seiner Zugmittel-Längsrichtung, das Riegelelement vom Gegenriegelelement lösend, verlagerbar ist.

Der erfindungsgemäße Vorteil besteht insbesondere darin, dass das am Halterahmen längsbeweglich geführte Zugmittel bauaufwendige Betätigungsgestänge oder Betätigungsgetriebe in baulich höchst einfacher Weise ersetzt und durch einfache Querverlagerung entgegen Federrückstellkraft eine Bewegung des Riegelelements vermittelt. Grundsätzlich kann das Riegelelement sowohl rotatorisch als auch translatorisch beweglich sein. Auch können das Riegelelement grundsätzlich patrizenförmig oder matrizenförmig und korrespondierend dazu das Gegenriegelelement matrizenförmig oder patrizenförmig ausgeführt sein.

Weitere vorteithafte weiterbildungen der Erfindung ergeben sich aus den Unteransprüchen.

In den Zeichnungen ist die Erfindung anhand eines bevorzugten Ausführungsbeispiels näher dargestellt, es zeigt
Fig. 1 eine räumliche Darstellung eines Befestigungsrahmens,
Fig. 2 eine Schnittdarstellung entsprechend der in Fig. 1 mit ll-ll bezeichneten Schnittlinie, wobei eine Teilkontur des Halterahmens gestrichelt eingetragen ist,
Fig. 3 einen Querschnitt durch die Anordnung Befestigungsrahmen /Halterahmen entsprechend der Schnittlinie III-III in Fig. 2 und
Fig. 4 einen teilweisen Längsschnitt entsprechend der in Fig. 1 mit IV-IV bezeichneten Schnittlinie.

Ein Befestigungsrahmen 10 einer Transportbehälter-Einrichtung, wie z. B. einer Skisack-Durchladeeinrichtung oder einer Durchladeeinrichtung mit einem Einsatzmodul 33, weist einen Flanschbereich 11 und einen Rahmenbereich 12 auf. Der Rahmenbereich 12 umgrenzt eine Rahmenöffnung 13. Der Flanschbereich 11 ist mit Befestigungslöchem 14 zur Befestigung des Befestigungsrahmens 10 rund um eine nicht dargestellte, z.B. kofferraumwandseitige, Durchladeöffnung versehen, welche im wesentlichen mit der Rahmenöffnung 13 ausgerichtet ist.

Der Rahmenbereich 12 weist einen oberen Querrahmenschenkel 15, einen unteren Querrahmenschenkel 16 sowie zwei einander parallele Längsrahmenschenkel 17, 18 auf. Außen in den Längsrahmenscherikein 17, 18 ist je eine Führungsnut 20 eingearbeitet, welche der translatorischen Führung je einer Riegelleiste 21 dient, an welcher je zwei Riegelzapfen 22 befestigt sind, deren freie Enden jeweils zur Rahmenöffnung 13 hinweisen.

Die Riegelzapfen 22 durchsetzen Langlöcher 23 der Längsrahmenschenkel 17, 18. Die Längsachsen der Langlöcher 23 erstrecken sich parallel zu den mit y und z bezeichneten Bewegungsrichtungen der Riegelleisten 21, also auch der Riegelzapfen 22.

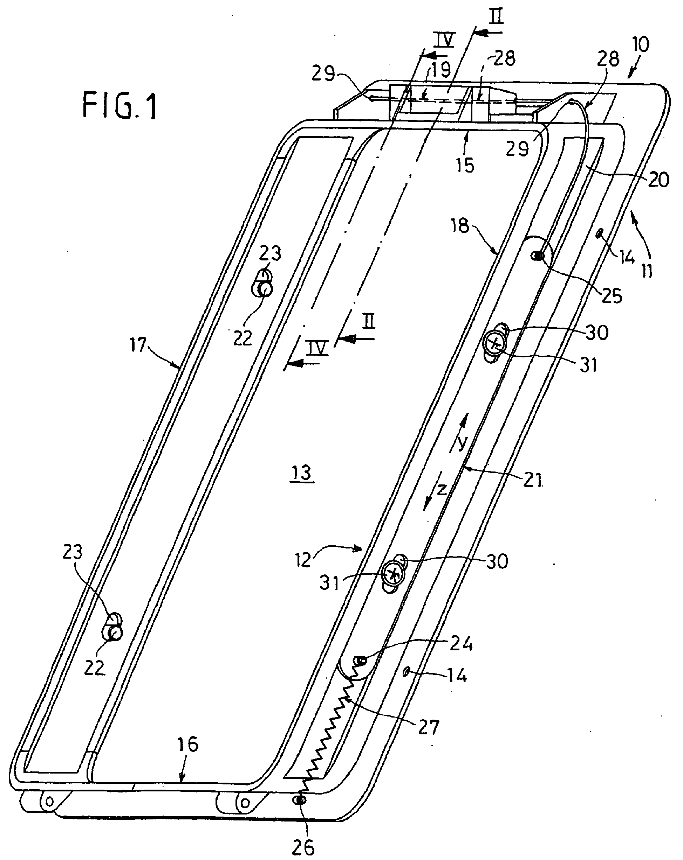

Jede Riegelleiste 21 weist einen unteren und einen oberen Haltezapfen 24, 25 auf. Der Flanschbereich 11 des Befestigungsrahmens 10 weist zwei Widerlagerzapfen 26 auf, von denen in Fig. 1 nur einer sichtbar ist.

Zwischen den unteren Haltezapfen 24 und den Widerlagerzapfen 26 ist jeweils eine Zugfeder 27 aufgespannt, während die beiden oberen Haltezapfen 25 der beiden Riegelleisten 21 über ein Zugmittel, im vorliegenden Fall über eine Drahtlitze 28, miteinander verbunden sind.

Die Drahtlitze 28 ist am Rahmenbereich 12 des Befestigungsrahmens 10 bewegungsgeführt, beispielsweise in Durchgriffslöchern 29. Die Drahtlitze 28 wird demnach durch die beiden Zugfedern 27 angespannt.

Zur Führung und Sicherung weisen die beiden Riegelleisten 21 jeweils zwei sich mit ihren langen Achsen entlang den Bewegungsrichtungen y und z erstreckende Langlöcher 30 auf, welche von in den Längsrahmenschenkeln 17, 18 gehaltenen Befestigungsschrauben 31 durchgriffen sind. Die Befestigungsschrauben 31 sind derart bemessen und angeordnet, dass sie gegenüber den Langlöchern 30 ein Bewegungsspiel gestatten.

Der Halterahmen 32, im vorliegenden Fall eines insgesamt mit 33 bezeichneten starren Behältermoduls, bildet symmetrisch aufgebaute matrizenartige Riegellöcher 34, welche jeweils einen etwa halbkreisförmigen Riegelbereich 35 und, in symmetrischer Anordnung zu den beiden halbkreisförmigen Riegelbereichen 35, einen etwa trichterförmigen Einführungsbereich 36 darstellen.

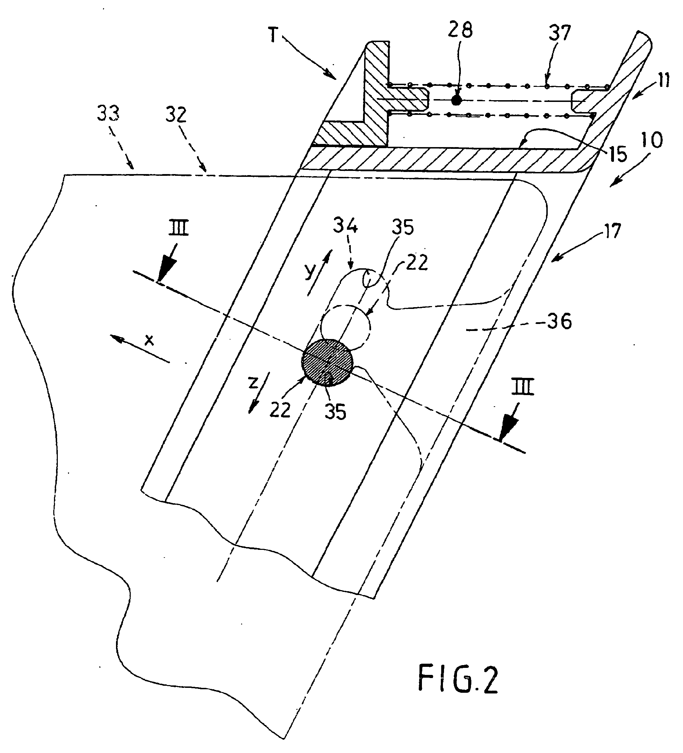

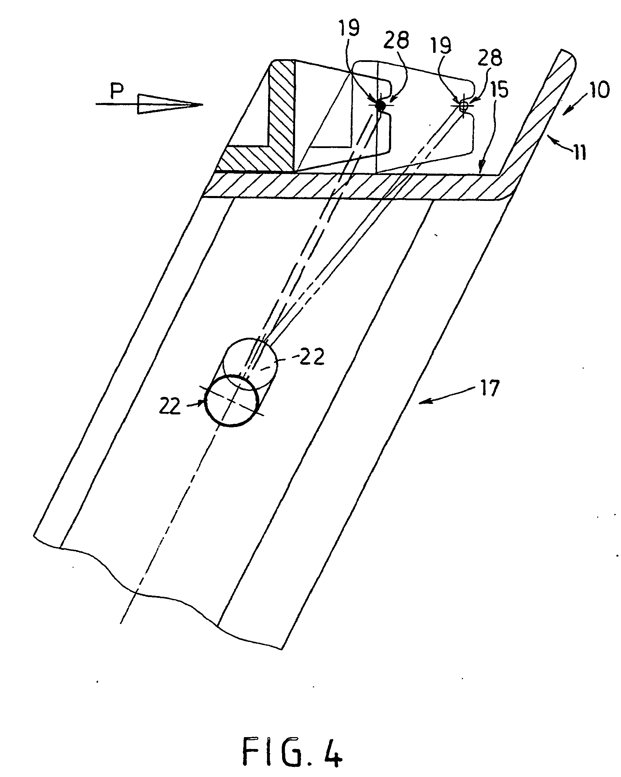

Sobald auf die Betätigungstaste T entgegen der Rückstellkraft der Schraubendruckfedem 37 ein Betätigungsdruck P auf den Bereich 19 der Drahtlitze 28 ausgeübt wird, verlagert sich die Drahtlitze 28, wie aus Fig. 4 ersichtlich, in Richtung des Drucks P nach rechts und zieht dabei die Riegelleisten 21 mit Riegelzapfen 22 in die gestrichelt eingetragene Lösestellung letzterer gemäß den Fig. 2 und 4, was eine Herausnahme des Behältermoduls 33 in Demontagerichtung x gestattet.

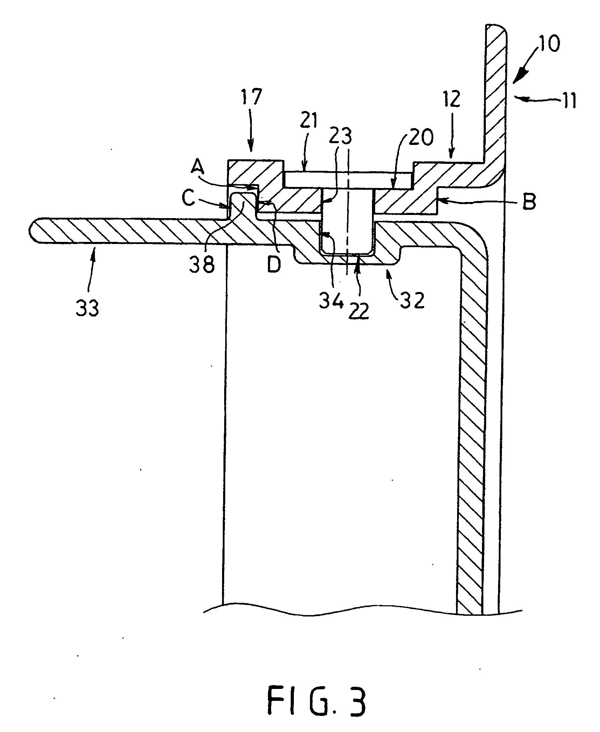

Aus Fig. 3 wird deutlich, dass der Befestigungsrahmen 10 jeweils eine Anschlagfläche A und B bildet, welchen Anschlagflächen C und D einer modulseitigen Anschlagleiste 38 entsprechen. Dadurch wird deutlich, dass das Behältermodul 33 mit seinem Halterahmen 32 sowohl von links oder von rechts oder auch - dank der symmetrischen Anordnung der Riegellöcher 34 gemäß Fig. 2 - auch in Überkopfanordnung in den Befestigungsrahmen 10 lösbar eingesetzt werden kann.

## Patentansprüche

1. Transportbehälter-Einrichtung für den Einbau in Kraftfahrzeuge, wie z.B. Durchladeeinrichtung, insbesondere für den sitzlehnen- oder kofferraumwandseitigen Einbau in Personenkraftwagen, mit einem in einer fahrzeugseitigen Durchladeöffnung anzubringenden, einen Halterahmen (32) des Transportbehälters (33) lösbar arretierenden Befestigungsrahmen(10), welchem mindestens ein mit einem Gegenriegelelement (34) des Halterahmens (32) kooperierendes Riegellelement (22) und mindestens ein mit dem Riegellelement (22) bewegungsverbundenes Antriebselement (T) zugeordnet sind, **dadurch gekennzeichnet, dass** das in einer Führung (20) des Befestigungsrahmens (10) beweglich gelagerte Riegelelement (22) an seiner einen Seite am freien Ende eines mit seinem Gegenende mindestens mittelbar am Befestigungsrahmen (10) gehaltenen und an letzterem beweglich geführten Zugmittels (28), wie Seil od. dgl., angebunden ist, dass an der anderen Seite des Riegelelements (22) eine Federrückstellkraft (27), das Zugmittel (28) spannend, angreift, und dass das gespannte Zugmittel (28) in seinem Bereich (19) zwischen seinem Gegenende und seinem freien Ende durch Bewegung des Betätigungselements (T) quer zu seiner Zugmittel-Längsrichtung, das Riegelelement (22) vom Gegenriegelelement (34) lösend, verlagerbar ist.

2. Transportbehälter-Einrichtung nach Anspruch 1, **dadurch gekennzeichnet, dass** das Riegelelement (22) an einer am Befestigungsrahmen (10) translatorisch geführten Riegelleiste (21) angeordnet ist.

3. Transportbehälter-Einrichtung nach Anspruch 2, **dadurch gekennzeichnet, dass** der Befestigungsrahmen (10) zur Führung der Riegelleiste (21) einen Führungskanal (20) aufweist.

4. Transportbehälter-Einrichtung nach Anspruch 3, **dadurch gekennzeichnet, dass** das Riegelelement von einem mit seiner Fußseite an der Riegelleiste (21) befestigten, in die Rahmenöffnung (13) des Befestigungsrahmens (10) hineinweisenden Riegelzapfen (22) gebildet ist.

5. Transportbehälter-Einrichtung nach einem der Ansprüche 2 bis 4, **dadurch gekennzeichnet, dass** der Halterahmen (10) zur Führung jeder Riegelleiste (21) an seinem Außenumfang den Führungskanal (20) bildet und dass der Riegelzapfen (22) die Befestigungsrahmenwand (17, 18) in einem sich mit seiner Längsachse in Bewegungsrichtung (y, z) des Riegelzapfens (22) erstreckenden Langloch (30) durchgreift.

6. Transportbehälter-Einrichtung nach einem der Ansprüche 1 bis 5, **dadurch gekennzeichnet, dass** die Federrückstellkraft von einer mit ihrem einen Ende an der Riegelleiste (21) und mit ihrem anderen Ende am Befestigungsrahmen (10) befestigten Zugfeder (27) bewirkt ist.

7. Transportbehälter-Einrichtung nach einem der Ansprüche 1 bis 6, **dadurch gekennzeichnet, dass** in etwa spiegelsymmetrischer Anordnung an beiden Längsseiten (17, 18) des Befestigungsrahmens (10) je eine Riegelleiste (21) translatorisch geführt ist, dass die korrespondierenden Enden (bei 24) beider Riegelleisten (21) von je einer Federrückstellkraft (27) beaufschlagt und ihre anderen Enden (bei 25) über das gespannte Zugmittel (28) miteinander verbunden sind.

8. Transportbehälter-Einrichtung nach einem der Ansprüche 2 bis 7, **dadurch gekennzeichnet, dass** jede Riegelleiste (21) mehrere Riegelelemente (22) aufweist.

9. Transportbehälter-Einrichtung nach einem der Ansprüche 1 bis 8, **dadurch gekennzeichnet, dass** das Betätigungselement (T) ein gegen Federrückstellkraft (bei 37) bewegbares, das Zugmittel (28) druckbeaufschlagendes Tastenelement (T) bildet.

## Claims

1. Transport-container apparatus for installation in motor vehicles, such as a load-through apparatus for example, particularly for installation in the seat back or boot wall of passenger motor cars, said apparatus having a fastening frame (10) which is to be fitted in a load-through aperture in the vehicle and detachably arrests a holding frame (32) belonging to said transport-container (33) and with which there is associated at least one bolting element (22) cooperating with a counter-bolting element (34) on the holding frame (32), and at least one driving element (T) connected, for movement purposes, to said bolting element (22),
**characterised in that** the bolting element (22), which is movably mounted in a guide (20) on the fastening frame (10), is attached, at one of its sides, to the free end of a traction means (28), such as a cable or the like, which is held, at least indirectly, on the fastening frame (10) by its opposite end and is movably guided on said fastening frame; that the other side of the bolting element (22) is acted upon, in a manner that tensions the traction means (28), by a spring-type restoring force (27); and that the tensioned traction means (28) can be displaced, in its region (19) between its opposite end and its free end, in a manner that releases the bolting element (22) from the counter-bolting element (34), by movement of the actuating element (T) transversely to the longitudinal direction of said traction means.

2. Transport-container apparatus according to Claim 1, **characterised in that** the bolting element (22) is disposed on a bolting strip (21) which is guided in a translatory manner on the fastening frame (10).

3. Transport-container apparatus according to Claim 2, **characterised in that** the fastening frame (10) has a guide channel (20) for guiding the bolting strip (21).

4. Transport-container apparatus according to Claim 3, **characterised in that** the bolting element is formed by a bolting peg (22) which is fastened to the bolting strip (21) by its foot side and points into the frame aperture (13) of the fastening frame (10) .

5. Transport-container apparatus according to one of Claims 2 to 4,
**characterised in that** the holding frame (10) forms the guide channel (20) for guiding each bolting strip (21) on its outer periphery, and that the bolting peg (22) reaches through the wall (17, 18) of the fastening frame in a slot (30) which extends with its longitudinal axis in the direction of movement (y, z) of said bolting peg (22).

6. Transport-container apparatus according to one of Claims 1 to 5,
**characterised in that** a spring-type restoring force is brought about by a tension spring (27) which is fastened to the bolting strip (21) by one of its ends, and to the fastening frame (10) by its other end.

7. Transport-container apparatus according to one of Claims 1 to 6,
**characterised in that** a bolting strip (21) is guided in a translatory manner in an approximately specularly symmetrical arrangement on each of the two longitudinal sides (17, 18) of the fastening frame (10), and that the corresponding ends of the two bolting strips (21) are each acted upon (at 24) by a spring-type restoring force (27) and their other ends are connected to one another (at 25) via the tensioned traction means (28).

8. Transport-container apparatus according to one of Claims 2 to 7,
**characterised in that** each bolting strip (21) has a number of bolting elements (22).

9. Transport-container apparatus according to one of Claims 1 to 8,
**characterised in that** the actuating element (T) forms a button element (T) which can be moved (at 37) against a spring-type restoring force and acts upon the traction means (28) with pressure.

## Revendications

1. Dispositif à contenu de transport, pour montage dans des véhicules automobiles, tel que, par exemple, dispositif de chargement traversant, en particulier pour montage, côté paroi de dossier ou de coffre à bagages, dans des voitures particulières, avec un cadre de fixation (10) à monter dans une ouverture de chargement située côté véhicule, bloquant de façon désolidarisable un cadre de maintien (32) du contenu de transport (33), cadre de fixation auquel sont associés au moins un élément de verrouillage (22), coopérant avec un élément de verrouillage conjugué (34) du cadre de maintien (32), et au moins un élément d'entraînement (T), relié cinématiquement à l'élément de verrouillage (22), **caractérisé en ce que** l'élément de verrouillage (22), monté mobile dans un guidage (20) du cadre de fixation (10), est relié, sur l'un de ses côtés, sur l'extrémité libre d'un moyen de traction (28), tel qu'un câble ou analogue, maintenu, par son extrémité conjuguée, au moins indirectement sur le cadre de fixation (10) et guidé de façon mobile sur ce dernier, **en ce que**, sur l'autre côté de l'élément de verrouillage (22) agit une force de rappel élastique (27) qui tend le moyen de traction (28), et **en ce que** le moyen de traction (28) tendu, dans sa zone (19) entre son extrémité conjuguée et son extrémité libre, est déplaçable, par un déplacement de l'élément d'actionnement (T), transversalement par rapport à sa direction longitudinale de moyen de traction, le déplacement ayant comme effet de désolidariser l'élément de verrouillage (22) vis-à-vis de l'élément de verrouillage conjugué (34).

2. Dispositif à contenu de transport selon la revendication 1, **caractérisé en ce que** l'élément de verrouillage (22) est disposé sur une bande de verrouillage (21) guidée en translation sur le cadre de fixation (10).

3. Dispositif à contenu de transport selon la revendication 2, **caractérisé en ce que** le cadre de fixation (10) présente un canal de guidage (20) pour guider la bande de verrouillage (21).

4. Dispositif à contenu de transport selon la revendication 3, **caractérisé en ce que** l'élément de verrouillage est formé par un tourillon de verrouillage (22), fixé, par son côté pied, sur la bande de verrouillage (21) et tourné dans l'ouverture de cadre (13) du cadre de fixation (10).

5. Dispositif à contenu de transport selon l'une des revendications 2 à 4, **caractérisé en ce que** le cadre de maintien (10), pour guider chaque bande de verrouillage (21), forme, sur sa périphérie extérieure, le canal de guidage (20), et **en ce que** le tourillon de verrouillage (22) traverse la paroi de cadre de fixation (17, 18), en un trou oblong (30) s'étendant avec son axe longitudinal orienté dans la direction de déplacement (y, z) du tourillon de verrouillage (22).

6. Dispositif à contenu de transport selon l'une des revendications 1 à 5, **caractérisé en ce que** la force de rappel élastique est provoquée par un ressort de traction (27), fixé, par une de ses extrémités, sur la bande de verrouillage (21) et, par son autre extrémité, sur le cadre de fixation (10).

7. Dispositif à contenu de transport selon l'une des revendications 1 à 6, **caractérisé en ce que**, à peu près en un agencement symétrique spéculaire, sur chacun des deux côtés longitudinaux (17, 18) du cadre de fixation (10), est guidée en translation une bande de verrouillage (21), **en ce que** les extrémités correspondantes des deux bandes de verrouillage (21) sont sollicitées chacune (en 24) par une force de rappel élastique (27) et leurs autres extrémités sont reliées ensemble (en 25) par le moyen de traction (28) tendu.

8. Dispositif à contenu de transport selon l'une des revendications 2 à 7, **caractérisé en ce que** chaque bande de verrouillage (21) présente plusieurs éléments de verrouillage (22).

9. Dispositif à contenu de transport selon l'une des revendications 1 à 8, **caractérisé en ce que** l'élément d'actionnement (T) forme un élément formant touche (T), déplaçable à l'encontre d'une force de rappel élastique (en 37) et sollicitant en pression le moyen de traction (28).
